# NEUE EUROPÄISCHE PATENTSCHRIFT

(11) **EP 2 392 453 B2**
(45) Veröffentlichungstag und Bekanntmachung des Hinweises auf die Entscheidung über den Einspruch: **13.09.2023**
(45) Hinweis auf die Patenterteilung: 29.11.2017
(21) Anmeldenummer: 10164607.3
(22) Anmeldetag: 01.06.2010
(51) Int. Cl.: B32B 5/20, B32B 15/08, B32B 27/06, B32B 27/40, B62D 29/00, B62D 33/04

(54) **Paneel eines Kofferaufbaus**
Panel of a vehicle load compartment
Panneau d'un compartiment de chargement de véhicule

(43) Veröffentlichungstag der Anmeldung: 07.12.2011
(73) Patentinhaber: Schmitz Cargobull AG, 48341 Altenberge (DE)
(72) Erfinder: Beelmann, Reinhard, 45721, Haltern am See (DE); Dahlhaus, Andreas, 48712 Gescher (DE)
(74) Vertreter: Cohausz & Florack

(56) Entgegenhaltungen:
- WO-A1-00/47401
- DE-A1-102007 051 129
- GB-A- 2 211 780
- US-A- 4 459 334
- US-A1- 2005 042 432
- Jim Riley ET AL: "NEW DEVELOPMENTS IN PUR COMPOSITE SPRAY MOLDING PUR-CSM TECHNOLOGY FOR MULTIPLE PROCESSES", , 7 August 2006 (2006-08-07), XP055156451, Retrieved from the Internet: URL:http://speautomotive.com/SPEA_CD/SPEA2 006/PDF/d/d3.pdf [retrieved on 2014-12-03]
- "A Cost-effective Hand-operated Polyurethane-Composite-Spray-Moulding Technology from Hennecke - SpecialChem - cost effective hand operated polyurethane composite spray moulding technology from hennecke", , 1 July 2009 (2009-07-01), pages 1-1, XP055156438, Retrieved from the Internet: URL:http://polymer-additives.specialchem.c om/news/industry-news/a-cost-effective-han d-operated-polyurethane-composite-spray-mo ulding-technology-from-hennecke [retrieved on 2014-12-03]
- F.C. Campbell: "Manufacturing Processes for Advanced Composites", , 1 January 2004 (2004-01-01), pages 17-25, XP055209137, ISBN: 978-1-85-617415-2 Retrieved from the Internet: URL:http://lib.myilibrary.com?ID=104809 [retrieved on 2015-08-24]

## Beschreibung

Die Erfindung betrifft ein Paneel eines Kofferaufbaus eines Nutzfahrzeugs, insbesondere Lastkraftwagens, Transporters, Anhängers und/oder Aufliegers, mit zwei Decklagen und einer zwischen den Decklagen angeordneten Kernlage, wobei wenigstens eine der Decklagen aus Blech gebildet ist und wobei die Kernlage aus geschäumtem Kunststoff gebildet ist. Derartige Paneele werden wegen ihres mehrschichtigen Aufbaus auch als Sandwichpaneel bezeichnet und insbesondere zum Aufbau von Kofferaufbauten von Nutzfahrzeugen für den Transport gekühlter Güter wie Lebensmitteln verwendet, wie in WO00/47401 offenbart. Die Paneele weisen eine Kernschicht auf, die sich zwischen zwei äußeren Decklagen befindet. Um die Wärmeleitung und das Gewicht des Paneels zu verringern und gleichzeitig eine hohe Stabilität des Paneels zu erreichen, wird die Kernlage durch einen geschäumten Kunststoff bebildet. Die Decklagen sind dagegen aus einem Metallblech gebildet, das ansehnlich, hygienisch und leicht zu reinigen ist. Die Stabilität des Paneels wird jedoch im Wesentlichen durch die Kernlage aus geschäumtem Kunststoff bereitgestellt.

Kofferaufbauten für Nutzfahrzeuge, wie Lastkraftwagen, Transporter, Anhänger und Auflieger, müssen verhältnismäßig rauen Einsatzbedingungen standhalten. So können die äußeren Decklagen der Kofferaufbauten beim Rangieren leicht mit Gegenständen, wie Gebäuden, kollidieren. Zudem können beim Be- und Entladen Gabelstapler oder Hubwagen mit den inneren Decklagen kollidieren. Derartige Kollisionen können zu Beulen in der entsprechenden Decklage führen. Man spricht in diesem Zusammenhang auch von Beulenbildung. Häufig haben diese Beulen keinen Einfluss auf die Stabilität eines Paneels. Ein verbeultes Paneel ist jedoch unansehnlich und hinterlässt einen qualitativ minderwertigen Eindruck.

Bei heftigeren Kollisionen kann es zu einer nachhaltigen lokalen Zerstörung der entsprechenden Decklage und/oder der Kernlage kommen. Die Decklage und/oder die Kernlage kann infolgedessen - wenn überhaupt - nur noch geringe mechanische Kräfte aufnehmen. Man spricht in diesem Zusammenhang auch von einem
"Defekt" im Sandwichpaneel. Dieser Defekt kann sich als sogenannte lokale Blasenbildung der Decklage darstellen, welche die Stabilität des Paneels beeinträchtigt.

Daher liegt die Aufgabe der vorliegenden Erfindung darin, das eingangs genannte und zuvor näher beschriebene Paneel derart auszugestalten und weiterzubilden, dass die Neigung des Paneels sowohl zur Beulenbildung als auch zur Blasenbildung vermindert wird.

Diese Aufgabe wird bei einem Paneel mit den Merkmalen des Anspruchs 1 gelöst. Die Verbundschicht, die vorzugsweise unmittelbar an die Decklage angrenzt, erhöht die Festigkeit und Schlagzähigkeit, wenn die entsprechende Decklage mit einem Gegenstand kollidiert. Da die Verbundschicht eine hohe Festigkeit aufweist, wird diese selbst bei kräftigen Kollisionen nicht eingedrückt. Die Verbundschicht leitet die Kräfte zudem großflächig an die Kernlage ab, so dass die poröse Struktur der Kernlage nicht zerstört wird. Die Verbundschicht kann verhältnismäßig dünn ausgestaltet sein, so dass die Kernlage den überwiegenden Teil der Paneeldicke ausmachen kann. Folglich ist die Auswirkung der Verbundschicht auf den Wärmedurchgangskoeffizienten des Paneels insgesamt gering.

Bedarfsweise kann das Paneel weitere Schichten aufweisen. Diese können dekorative Schichten oder dergleichen sein, ohne dass diese zusätzlichen Schichten die mit der Erfindung erzielten Vorteile nennenswert beeinflussen. Es ist also eine hohe Flexibilität beim Aufbau der Paneele gewährleistet.

Bei einer ersten bevorzugten Ausgestaltung des Paneels wird der ungeschäumte Kunststoff der Verbundschicht aus einem Polyurethanmaterial gebildet. Dieses Material kann an die gewünschten mechanischen und thermischen Eigenschaften angepasst werden. Das Polyurethanmaterial lässt sich zudem leicht verarbeiten.

Um eine feste Bindung zwischen der Verbundschicht und der Kernlage sicherzustellen, bietet es sich an, wenn die Kunststoffe der Kernlage und der Verbundschicht der gleichen Klasse von Kunststoffen angehören. Die Kernlage und die Verbundschicht können bedarfsweise auch den gleichen Kunststoff umfassen. Insbesondere bietet es sich an, wenn die Kernlage aus geschäumten Polyurethanmaterial gebildet ist. Polyurethanmaterialien haben gute thermische und mechanische Eigenschaften. Besonders bevorzugt ist die Verwendung von Polyurethanmaterialien als Kernlage, wenn der ungeschäumte Kunststoff der Verbundschicht ebenfalls ein Polyurethanmaterial ist.

Um die Bindungskräfte zwischen der Verbundschicht und der Kernlage zu erhöhen und den Anteil der eingeschlossenen Spannungen im Sandwichpaneel so gering wie möglich zu halten, können die Verbundschicht und der geschäumte bzw. zu schäumende Kunststoff der Kernlage nass-in-nass aufeinander aufgetragen und anschließend ausgehärtet werden. Dann kann auf ein Verkleben von Verbundschicht und Kernlage verzichtet werden. Dies ist insbesondere dann der Fall, wenn sowohl der ungeschäumte Kunststoff der Verbundschicht und die Kernlage aus einem Polyurethanmaterial bestehen. Unter einem Auftrag nass-in-nass wird verstanden, dass die Schichten aufeinander aufgebracht werden bevor diese, jedenfalls vollständig, ausgehärtet sind. Bei Polyurethanmaterialien findet insbesondere eine chemische Aushärtung statt, so dass die Verbundschicht und die Kernlage vorzugsweise bereits in Kontakt miteinander stehen, bevor die Kernlage und/oder die Verbundschicht vollständig ausgehärtet sind. Das Auftragen des zu schäumenden Kunststoffs der Kernlage nass-in-nass auf die Verbundschicht bietet sich grundsätzlich dann an, wenn das Material der Verbundschicht eine hohe Reaktivität aufweist.

Für den Fall, dass das Material der Verbundschicht eine niedrige Reaktivität aufweist, kann es dagegen bevorzugt sein, wenn zunächst die Verbundschicht ausgehärtet wird, bevor der zu schäumende Kunststoff auf die Verbundschicht aufgebracht wird. Wenn der zu schäumende Kunststoff gute Hafteigenschaften aufweist, wie dies insbesondere bei Polyurethanmaterialien der Fall sein kann, kann auf eine zusätzliche Verklebung von Verbundschicht und Kernlage verzichtet werden. Ob die Verbundschicht beim Auftrag des zu schäumenden Kunststoffs schon ausgehärtet war oder nicht, wird sich dennoch auf die Verbindung zwischen der Verbundschicht und der Kernschicht des fertigen Paneels auswirken. Im ersten Fall wird ein homogenerer bzw. stetigerer Übergang von der Verbundschicht zur Kernschicht erhalten.

Gute mechanische Eigenschaften der Verbundschicht werden erhalten, wenn das Fasermaterial der Verbundschicht ein Glasfasermaterial ist. Dann kann die bei einer Kollision auf die Verbundschicht einwirkende Kraft auf eine große Fläche verteilt und infolgedessen großflächig an die Kernlage übertragen werden. Lokale Belastungsspitzen der Kernlage werden dadurch vermindert.

Das Einbringen des Glasfasermaterials ist besonders einfach, wenn es sich dabei um Glasfaserhäcksel handelt, die sich von Glasfasern durch kürzere Faserlängen unterscheiden. Glasfaserhäcksel können beispielsweise über eine Düse, ggf. unter Verwendung eines Trägerfluids wie beispielsweise Luft, aufgebracht werden. Dies ist grundsätzlich auch mit anderen Faserhäckseln möglich. Glasfaserhäcksel eignen sich aber wegen der guten Einbindung in die Verbundschicht und der guten mechanischen Eigenschaften besonders gut.

Fertigungstechnisch ist es besonders einfach, wenn der Kunststoff und das Fasermaterial der Verbundschicht separat auf die entsprechende Decklage aufgesprüht werden. Das Aufsprühen erfolgt dann so, dass das Fasermaterial gleichmäßig in den Kunststoff der Verbundschicht eingebettet wird. Das kann etwa dadurch sichergestellt werden, dass die Düsen für das Aufsprühen des Kunststoffs der Verbundschicht und des Fasernmaterials nahe beieinander angeordnet sind.

Gute mechanische Eigenschaften bei gleichzeitig geringer Schichtdicke der Verbundschicht können erreicht werden, wenn der Anteil des ungeschäumten Kunststoffs der Verbundschicht weniger als 50 Gew.-% bezogen auf das Paneel umfassend die Decklagen, die Kernlage und die Verbundschicht beträgt. Um den Einfluss der Faserstruktur auf die mechanischen Eigenschaften noch zu erhöhen, kann der Anteil des ungeschäumten Kunststoffs auch weniger als 40 Gew.-% bezogen auf das Paneel mit Decklagen, Kernlage und Verbundschicht betragen. Insbesondere das Aufsprühen des Kunststoffs und des Fasermaterials auf die entsprechende Decklage macht es möglich, bei homogener Verteilung des Fasermaterials den Anteil des Kunststoffs auf weniger als 30 Gew.-% des Paneels mit Decklagen, Kernlage und Verbundschicht zu reduzieren, was auch zu einer Kosteneinsparung führt.

Damit eine gute thermische Isolation und eine hohe mechanische Festigkeit sichergestellt werden können, kann es zweckmäßig sein, wenn die Verbundschicht nicht vollflächig, sondern lediglich in Zonen erhöhter mechanischer Belastung vorgesehen ist. In Bereichen des Paneels, die geringeren Belastungen ausgesetzt sind, etwa weil Kollisionen mit den typischerweise beim Be- und Entladen eines Kofferaufbaus verwendeten Einrichtungen weniger wahrscheinlich oder weniger heftig sind, kann bedarfsweise auf eine Verbundschicht gänzlich verzichtet werden. Alternativ oder zusätzlich ist es aber auch möglich, die Verbundschicht in unterschiedlichen Abschnitten des Paneels mit unterschiedlichen Schichtdicken vorzusehen. Die Schichtdicke wird dann gerade so groß gewählt, dass das Paneel den zu erwartenden lokalen mechanischen Belastungen standhält.

In diesem Zusammenhang ist es besonders bevorzugt, wenn die Verbundschicht lediglich im Bereich wenigstens einer Ladungssicherungseinrichtung oder dort mit einer größeren Schichtdicke vorgesehen ist. Bei der Ladungssicherungseinrichtung handelt es sich vorzugsweise um eine am Paneel vorgesehene, insbesondere in das Paneel oder die Decklage eingelassene, Ladungssicherungsschiene. Diese Bereiche sind dann besonders widerstandsfähig gegenüber äußeren mechanischen Einwirkungen ausgebildet.

Alternativ oder zusätzlich kann die Verbundschicht auch im Bereich wenigstens einer Doppelstockschiene überhaupt oder mit einer größeren Schichtdicke vorgesehen sein. Unter einer Doppelstockschiene wird eine Schiene zur Aufnahme von Trägerelementen verstanden, auf denen Güter in gegenüber dem Ladeboden erhöhter Position abgestellt werden können.
Auch die Doppelstockschienen können in das Paneel eingelassen sein. Dies bedeutet meist, dass die Doppelstockschienen in die entsprechende Decklage eingelassen sind.
Doppelstockschienen verlaufen in der Regel vertikal, während Ladungssicherungsschienen in der Regel horizontal, jeweils bezogen auf den Kofferaufbau, verlaufen.

Alternativ oder zusätzlich kann die Verbundschicht auch in einem Bereich einer Sockelscheuerleiste vorgesehen sein. Unter einer Sockelscheuerleiste wird eine meist aus einem Metall gebildete, sich längs zum Paneel erstreckende Leiste im Bodenbereich des Paneels verstanden, an der Wagen oder dergleichen anstoßen können, um die Decklagen vor Beschädigung zu schützen. Wird im Bereich oberhalb der Sockelscheuerleiste eine Verbundschicht vorgesehen, kann der Übergangsbereich zwischen Sockelscheuerleiste und Decklage gegen Beschädigung geschützt bzw. die Sockelscheuerleiste niedriger ausgebildet werden. Alternativ oder zusätzlich kann die Verbundschicht auch im Bereich hinter der Sockelscheuerleiste vorgesehen sein. Die Sockelscheuerleiste wird so stabilisiert und kann gegebenenfalls dünner ausgebildet werden.

Alternativ oder zusätzlich kann die Verbundschicht auch im Bereich einer Zusatzscheuerleiste vorgesehen sein. Unter einer Zusatzscheuerleiste wird eine meist aus einem Metall gebildete Scheuerleiste verstanden, die beabstandet zur Unterseite des Paneels, insbesondere deutlich oberhalb einer Sockelscheuerleiste, vorgesehen ist. Wie die Sockelscheuerleiste erstreckt sich die Zusatzscheuerleiste in Längsrichtung des Paneels. Es können auch mehrere Zusatzscheuerleisten übereinander an einem Paneel vorgesehen sein. Die Verbundschicht kann je nach Anforderungsprofil unterhalb, oberhalb und/oder hinter der Zusatzscheuerleiste vorgesehen sein. Oberhalb und unterhalb der Zusatzscheuerleiste kann die Verbundschicht den Übergangsbereich gegenüber Beschädigung schützen. Hinter der Zusatzscheuerleiste kann diese so stabilisiert werden, dass sie dünner ausgebildet werden kann. Grundsätzlich erlaubt die Verbundschicht im Bereich der Zusatzscheuerleiste wie auch im Bereich der Scheuerleiste eine Verbesserung der Krafteinleitung in das Paneel.

Wenn die Verbundschicht nicht vollflächig zwischen der Kernschicht und der Decklage vorgesehen ist, bietet es sich an, wenn die Ränder der Verbundschicht nicht überwiegend geradlinig verlaufen, sondern im Wesentlichen wellenförmig und/oder bogenförmig ausgebildet sind. Alternativ oder zusätzlich kann vorgesehen sein, dass die Dicke der Decklage zu den Rändern hin abnimmt. Auf diese Weise können Kräfte über die Verbundschicht besser in das Paneel eingeleitet werden. An geradlinigen Rändern auftretende Lastspitzen können verhindert werden.

Die Verbundschicht kann bedarfsweise mehrlagig ausgebildet sein. Unter einer mehrlagigen Verbundschicht wird dabei eine solche verstanden, die in mehreren Lagen nacheinander aufgebracht wird, wobei die einzelnen Lagen vor dem Aufbringen einer weiteren Schicht vollständig oder wenigstens teilweise ausgehärtet sind. Das mehrlagige Aufbringend der Verbundschicht kann sowohl bei vollflächigen Verbundschichten als auch bei lediglich bereichsweise vorgesehenen Verbundschichten angewendet werden. Ein mehrlagiger Aufbau der Verbundschicht bietet sich insbesondere dann an, wenn die Verbundschicht nicht in einem Arbeitsgang in der gewünschten Dicke und/oder mit den gewünschten Eigenschaften aufgebracht werden kann. Alternativ oder zusätzlich zu einem Auftrag der Verbundschicht in verschiedenen Dicken verteilt über das Paneel kann die Verbundschicht in unterschiedlichen Zonen des Paneels auch mit unterschiedlichen vielen Lagen vorgesehen sein. So können einzelne Zonen des Paneels gezielt stabilisiert werden. Es kann beispielsweise auch vorgesehen sein, dass eine Lage der Verbundschicht vollflächig aufgebracht ist, während eine oder mehrere weitere Lagen nur in bestimmten Bereichen des Paneels aufgebracht sind.

Es hat sich gezeigt, dass aus Stabilitätsgründen Blechstärken jedenfalls für die der Verbundschicht zugeordneten Decklage von weniger als 0,7 mm ausreichen. Aus Kostengründen können die Blechstärken auch weniger als 0,55 mm betragen.

Um möglichen Kollisionen des Paneels von beiden Seiten Rechnung zu tragen, kann auch zwischen der Kernlage und beiden Decklagen wenigstens abschnittsweise jeweils eine Verbundschicht der zuvor beschriebenen Art vorgesehen sein.

Fertigungstechnisch bietet es sich dabei an, wenn die beiden jeweils einer Decklage zugeordneten Verbundschichten die gleiche Zusammensetzung aufweisen. Vorzugsweise sind die Verbundschichten grundsätzlich gleichartig ausgebildet. Es kann aufgrund unterschiedlicher mechanischer Anforderungen auch vorgesehen sein, dass die Verbundschichten der gegenüberliegenden Decklagen an unterschiedlichen Abschnitten des Paneels und - alternativ oder zusätzlich - auch mit unterschiedlichen Schichtdicken vorgesehen sind.

Wenn zwei Verbundschichten an zwei gegenüberliegenden Seiten der Kernlage vorgesehen sind, kann jede einzelne Verbundschicht, und zwar unabhängig von der jeweils anderen Verbundschicht, wie zuvor beschrieben ausgebildet sein. Es kann also für jede Verbundschicht eine andere Kombination der vorstehend beschriebenen und/oder in den abhängigen Ansprüchen angegebenen bevorzugten Merkmale vorgesehen sein.

Nachfolgend wird die Erfindung anhand einer lediglich Ausführungsbeispiele darstellenden Zeichnung näher erläutert.

In der Zeichnung zeigt
- Fig. 1: einen schematischen Querschnitt durch ein erstes Ausführungsbeispiel des erfindungsgemäßen Paneels,
- Fig. 2: einen schematischen Querschnitt durch ein zweites Ausführungsbeispiel des erfindungsgemäßen Paneels,
- Fig. 3: eine schematische Draufsicht auf ein drittes Ausführungsbeispiel des erfindungsgemäßen Paneels und
- Fig. 4: ein Detail des Paneels aus Fig. 3 in einer schematischen Draufsicht und
- Fig. 5: eine schematische Draufsicht auf ein viertes Ausführungsbeispiel des erfindungsgemäßen Paneels.

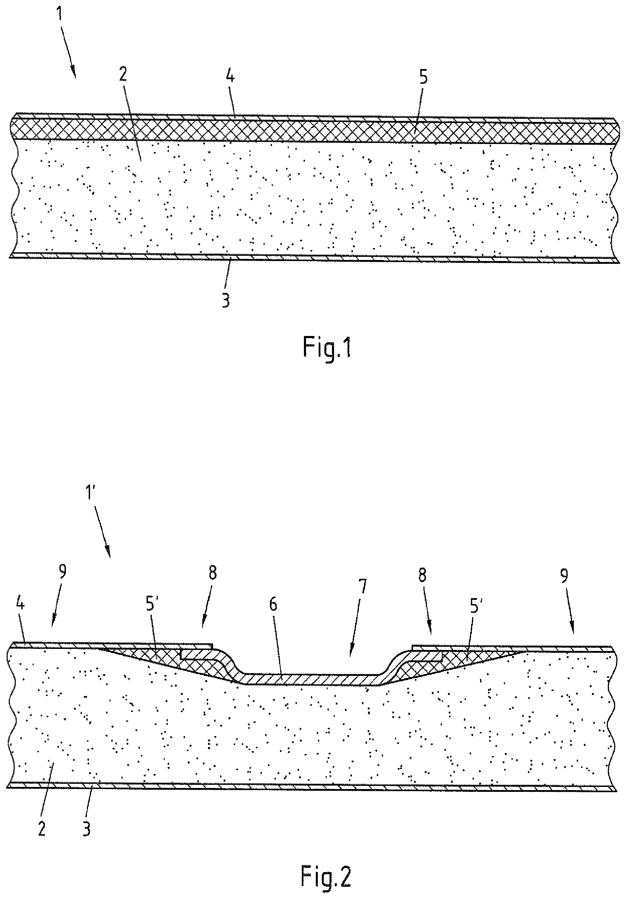

In der Fig. 1 ist ein Ausschnitt eines Querschnitts durch ein Paneel 1 dargestellt. Das Paneel 1 weist eine Kernlage 2 aus einem geschäumten Polyurethanmaterial auf. Angrenzend zu der Kernlage ist eine äußere Decklage 3 vorgesehen, die der Außenseite des Nutzfahrzeugs zugeordnet ist. Der äußeren Decklage gegenüber ist eine innere Decklage 4 vorgesehen, die dem Innenraum eines Kofferaufbaus zugeordnet sein soll, der unter Verwendung des dargestellten Paneels 1 aufgebaut ist. Sowohl bei der inneren Decklage 4 als auch bei der äußeren Decklage 3 handelt es sich um Blechlagen einer Stärke von wahlweise 0,4 mm oder 0,6 mm. Nicht dargestellt ist, dass auf der Außenseite der äußeren Decklage 3 noch eine dekorative Folie aufkaschiert sein kann. Diese dient jedoch vorwiegend der Optik des Paneels 1 und könnte auch durch eine andere Schicht ersetzt werden.

Zwischen der Kernlage 2 und der inneren Decklage 4 ist eine Verbundschicht 5 vorgesehen, die aus Glasfaserhäckseln und einem Polyurethanmaterial besteht. Das Polyurethanmaterial ist, anders als bei der Kernlage 2, nicht geschäumt. In das Polyurethanmaterial sind stattdessen die Glasfaserhäcksel gleichmäßig eingearbeitet. Die Verbundschicht 5 weist zu etwa 60 Gew.-% bis 80 Gew.-% Polyurethanmaterial und zu etwa 20 Gew.-% bis 40 Gew.-% Glasfaserhäcksel auf. Vorzugsweise sind keine nennenswerten Anteile weiterer Komponenten in der Verbundschicht 5 vorhanden.

Zur Herstellung der Verbundschicht 5 sind das Polyurethanmaterial und die Glasfaserhäcksel mit separaten Düsen auf die Innenseite der inneren Decklage 4 aufgesprüht worden. Durch das Aufsprühen wird eine gleichmäßige Verteilung der Glasfaserhäcksel als disperse Phase in der Matrix aus Polyurethanmaterial der Verbundschicht 5 als kontinuierliche Phase erreicht. Bevor das Polyurethanmaterial der Verbundschicht 5 ausgehärtet ist, wird der Hohlraum zwischen der so geschaffenen Verbundschicht 5 und der gegenüberliegenden äußeren Decklage 3 ausgeschäumt, und zwar mit dem Polyurethanmaterial der Kernschicht 2. Die beiden Polyurethanmaterialien reagieren dann zusammen und miteinander in Kontakt stehend aus. Auf diese Weise wird eine feste Verbindung zwischen der Kernlage 2 und der Verbundschicht 5 erreicht.

In der Fig. 2 ist ein Teil eines Querschnitts eines anderen Paneels 1' dargestellt. Dieses Paneel 1' ist grundsätzlich gleichartig mit dem in der Fig. 1 dargestellten Paneel 1 aufgebaut. Ein wesentlicher Unterschied besteht jedoch darin, dass die Verbundschicht 5' des Paneels 1' nicht vollflächig zwischen der Kernlage 2 und der inneren Decklage 4' vorgesehen ist. Die Verbundschicht 5' ist stattdessen lediglich im Bereich einer Schiene 6 vorgesehen, bei der es sich sowohl um eine Doppelstockschiene als auch um eine Ladungssicherungsschiene handeln kann.

Die Schiene 6 ist beim dargestellten und insoweit bevorzugten Paneel 1' bündig in selbiges eingelassen. Dazu ist in die innere Decklage 4' eine Öffnung 7 eingebracht. Es könnte jedoch auch vorgesehen sein, dass in der inneren Decklage eine Vertiefung eingepresst ist, in der die Schiene 6 aufgenommen ist. Umlaufend zu der Schiene 6 ist in den angrenzenden Bereichen 8 der inneren Decklage 4' eine Verbundschicht 5' vorgesehen. In den übrigen Bereichen 9 des Paneels 1' ist jedoch auf eine Verbundschicht verzichtet worden.

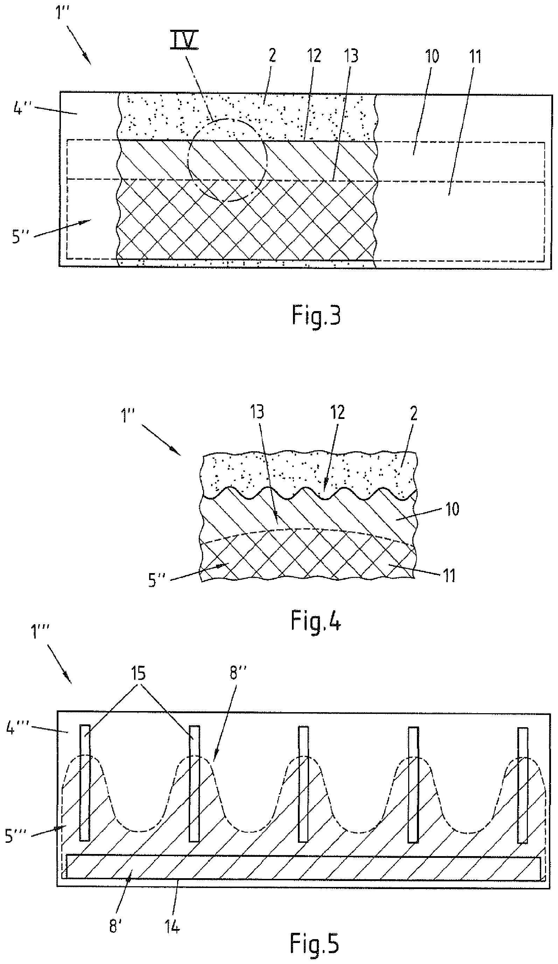

In der Fig. 3 ist ein Paneel 1" mit einer zweilagigen Verbundschicht 5" dargestellt. Jede Lage 10,11 der Verbundschicht 5" ist durch Aufsprühen von Polyurethanmaterial und Glasfaserhäckseln gefertigt, wobei die erste Lage 10 vor dem Aufbringen der zweiten Lage 11 wenigstens teilweise ausgehärtet worden ist. Die erste Lage 10 der Verbundschicht 5" erstreckt sich im Wesentlichen über die gesamte Längserstreckung des Paneels 1", ohne im oberen Bereich des Paneels 1" vorgesehen zu sein. Die zweite Lage 11 der Verbundschicht 5", die auf die erste Lage 10 der Verbundschicht 5" aufgebracht ist, erstreckt sich ebenfalls im Wesentlichen über die gesamte Längserstreckung des Paneels 1" aber lediglich vom unteren Ende des Paneels 1" bis etwa in die Paneelmitte.

In der Fig. 4 ist ein Ausschnitt des Paneels 1" gemäß Fig. 3 dargestellt. Weder die erste Lage 10 noch die zweite Lage 11 der Verbundschicht 5" endet mit einem geradlinig ausgebildeten Rand 12,13. Vielmehr ist der Rand 12 der ersten Lage 10 der Verbundschicht 5" wellenförmig ausgebildet, während der Rand 13 der zweiten Lage 11 der Verbundschicht 5" bogenförmig ausgebildet ist.

In der Fig. 5 ist in Paneel 1''' mit einer auf der Innenseite der inneren Decklage 4''' vorgesehenen Sockelscheuerleiste 14 und mehreren Doppelstockschienen 15 dargestellt. Die Verbundschicht 5''' ist dabei in Bereichen 8' hinter und oberhalb der Sockelscheuerleiste 14 über im Wesentlichen die gesamte Längserstreckung des Paneels 1''' vorgesehen. Darüber hinaus ist die Verbundschicht 5''' jeweils in Bereichen 8'' der Doppelstockschienen 15 weiter nach oben gezogen. Beim dargestellten und insoweit bevorzugten Paneel 1''' ragen die Doppelstockschienen 15 jedoch weiter nach oben als die Verbundschicht 5'''.

## Patentansprüche

1. Paneel (1,1',1",1‴) eines Kofferaufbaus eines Nutzfahrzeugs, insbesondere Lastkraftwagens, Transporters, Anhängers und/oder Aufliegers,
- mit zwei Decklagen (3,4,4' ,4",4‴) und einer zwischen den Decklagen (3,4,4',4",4‴) angeordneten Kernlage (2),
- wobei wenigstens eine der Decklagen (3,4,4',4",4‴) aus Blech gebildet ist und
- wobei die Kernlage (2) aus geschäumtem Kunststoff gebildet ist,
- wobei zwischen der Kernlage (2) und einer aus Blech gebildeten Decklage (3,4,4',4",4‴) wenigstens abschnittsweise eine Verbundschicht (5,5',5",5‴), umfassend einen ungeschäumten Kunststoff und ein Fasermaterial vorgesehen ist,
**dadurch gekennzeichnet, dass** das Fasermaterial als disperse Phase gleichmäßig in einer Matrix des Kunststoffs als kontinuierliche Phase verteilt ist, dass die Verbundschicht (5,5' ,5",5‴) und die Kernlage (2) unter Verzicht auf eine zusätzliche Verklebung miteinander verbunden sind und dass die Verbundschicht (5,5') und der geschäumte Kunststoff der Kernlage (2) nass-in-nass aufeinander aufgetragen und anschließend ausgehärtet sind oder der zu schäumende Kunststoff der Kernlage (2) auf die bereits ausgehärtete Verbundschicht (5",5‴) aufgetragen und anschließend ausgehärtet ist.

2. Paneel nach Anspruch 1, **dadurch gekennzeichnet, dass** der ungeschäumte Kunststoff der Verbundschicht (5,5',5", 5‴) aus einem Polyurethanmaterial gebildet ist.

3. Paneel nach Anspruch 1 oder 2,
**dadurch gekennzeichnet, dass** die Kernlage (2) aus geschäumtem Polyurethanmaterial gebildet ist.

4. Paneel nach einem der Ansprüche 1 bis 3,
**dadurch gekennzeichnet, dass** das Fasermaterial der Verbundschicht (5,5',5'',5‴) ein Glasfasermaterial ist.

5. Paneel nach Anspruch 4,
**dadurch gekennzeichnet, dass** das Glasfasermaterial Glasfaserhäcksel sind.

6. Paneel nach einem der Ansprüche 1 bis 5,
**dadurch gekennzeichnet, dass** der Anteil des ungeschäumten Kunststoffs der Verbundschicht (5,5',5",5‴) wenigstens 50 Gew.-%, vorzugsweise wenigstens 60 Gew.-%, insbesondere zwischen 60 Gew.-% und 80 Gew.-%, jeweils bezogen auf das Paneel umfassend die Decklagen (3,4,4',4",4‴), die Verbundschicht (5,5',5",5‴) und die Kernschicht (2) beträgt.

7. Paneel nach einem der Ansprüche 1 bis 6,
**dadurch gekennzeichnet, dass** die Verbundschicht (5',5",5‴) lediglich in Zonen erhöhter mechanischer Belastungen, wie etwa im Bereich (8) wenigstens einer Ladungssicherungseinrichtung, insbesondere einer Ladungssicherungsschiene (6), und/oder im Bereich (8") wenigstens einer Doppelstockschiene (6), vorgesehen ist.

8. Paneel nach Anspruch 7,
**dadurch gekennzeichnet, dass** die Verbundschicht (5‴) im Bereich (8') einer Scheuerleiste (14) und/oder einer Zusatzscheuerleiste vorgesehen ist.

9. Paneel nach Anspruch 7 oder 8,
**dadurch gekennzeichnet, dass** die Ränder (12,13) der lediglich bereichsweise vorgesehenen Verbundschicht (5',5",5‴) im Wesentlichen wellenförmig und/oder bogenförmig ausgebildet sind.

10. Paneel nach einem der Ansprüche 1 bis 9,
**dadurch gekennzeichnet, dass** die Verbundschicht (5,5") vollflächig und/oder lediglich bereichsweise mehrlagig vorgesehen ist.

11. Paneel nach einem der Ansprüche 1 bis 10,
**dadurch gekennzeichnet, dass** das Blech der der Verbundschicht (5,5',5",5‴) zugeordneten Deckschicht (4,4",4‴) weniger als 0,7 mm, vorzugsweise weniger als 0,55 mm, dick ist.

12. Paneel nach einem der Ansprüche 1 bis 11,
**dadurch gekennzeichnet, das** zwischen der Kernlage und beiden Decklagen wenigstens abschnittsweise jeweils eine Verbundschicht vorgesehen ist.

13. Paneel nach einem der Ansprüche 1 bis 12,
**dadurch gekennzeichnet, dass** die Verbundschichten hinsichtlich ihrer Zusammensetzung gleichartig ausgebildet sind.

## Claims

1. Panel (1, 1', 1", 1"') of a box body of a commercial vehicle, in particular a truck, transporter, trailer and/or semitrailer,
- having two covering layers (3, 4, 4', 4", 4"') and a core layer (2) which is arranged between the covering layers (3, 4, 4', 4", 4"'),
- wherein at least one of the covering layers (3, 4, 4', 4", 4"') is formed from sheet metal, and
- wherein the core layer (2) is formed from foamed plastics material,
- wherein a composite layer (5, 5', 5", 5"') comprising an unfoamed plastics material and a fibre material is at least partially provided between the core layer (2) and a covering layer (3, 4, 4', 4",4"') which is formed from sheet metal, **characterised in that** the fibre material is distributed as a disperse phase in a uniform manner in a matrix of the plastics material as a continuous phase, **in that** the composite layer (5, 5', 5", 5"') and the core layer (2) are connected to each other with an additional adhesive bonding being dispensed with and **in that** the composite layer (5, 5') and the foamed plastics material of the core layer (2) are applied to each other wet-on-wet and subsequently cured or the plastics material of the core layer (2) which is intended to be foamed is applied to the already-cured composite layer (5", 5'") and is subsequently cured.

2. Panel according to claim 1,
**characterised in that** the unfoamed plastics material of the composite layer (5, 5', 5", 5"') is formed from a polyurethane material.

3. Panel according to claim 1 or 2,
**characterised in that** the core layer (2) is formed from foamed polyurethane material.

4. Panel according to any one of claims 1 to 3,
**characterised in that**
the fibre material of the composite layer (5, 5', 5",5"') is a glass fibre material.

5. Panel according to claim 4,
**characterised in that**
the glass fibre material is shredded glass fibre.

6. Panel according to any one of claims 1 to 5,
**characterised in that**
the proportion of the unfoamed plastics material of the composite layer (5, 5', 5", 5"') is at least 50% by weight, preferably at least 60% by weight, in particular between 60% by weight and 80% by weight, with respect to the panel comprising the covering layers (3, 4, 4', 4", 4"'), the composite layer (5, 5', 5", 5"') and the core layer (2).

7. Panel according to any one of claims 1 to 6,
**characterised in that**
the composite layer (5', 5", 5"') is provided only in zones of increased mechanical loads, such as, for instance, in the region (8) of at least one load securing device, in particular a load securing rail (6), and/or in the region (8") of at least one double-deck rail (6).

8. Panel according to claim 7,
**characterised in that**
the composite layer (5"') is provided in the region (8') of a skirting board (14) and/or a supplementary skirting board.

9. Panel according to claim 7 or 8,
**characterised in that**
the edges (12, 13) of the composite layer (5', 5", 5"') which is provided only partially are constructed in a substantially undulating and/or curved manner.

10. Panel according to any one of claims 1 to 9, **characterised in that** the composite layer (5, 5") is provided in multiple layers over the complete surface and/or only partially.

11. Panel according to any one of claims 1 to 10, **characterised in that** the metal sheet of the covering layer (4, 4", 4"') which is associated with the composite layer (5, 5', 5", 5"') is less than 0.7 mm, preferably less than 0.55 mm, thick.

12. Panel according to any one of claims 1 to 11,
**characterised in that**
a composite layer is at least partially provided between the core layer and both covering layers.

13. Panel according to claim 12,
**characterised in that**
the composite layers are constructed in an identical manner with respect to their composition.

## Revendications

1. Panneau (1, 1', 1", 1 ‴) d'un compartiment de chargement de véhicule d'un véhicule utilitaire, en particulier d'un camion, véhicule de transport, remorque et/ou semi- remorque,
- avec deux couches supérieures (3, 4, 4', 4", 4‴) et une couche centrale (2) agencée entre les couches supérieures (3, 4, 4', 4", 4‴),
- où au moins une des couches supérieures (3, 4, 4', 4", 4‴) est conçue en tôle et
- où la couche centrale (2) est conçue en matière plastique expansée,
- où l'on prévoit entre la couche centrale (2) et une couche supérieure conçue en tôle (3, 4, 4', 4", 4‴), au moins par endroits, une couche composite (5, 5', 5", 5'") comportant une matière plastique non expansée et un matériau fibreux, **caractérisé en ce que**
le matériau fibreux en tant que phase dispersée est distribué uniformément dans une matrice de la matière plastique en tant que phase continue, **en ce que** la couche composite (5, 5', 5", 5‴) et la couche centrale (2) sont reliées ensemble sans avoir recours à un collage supplémentaire et la couche composite (5, 5') et la matière plastique expansée de la couche centrale (2) sont appliquées l'une sur l'autre, mouillé sur mouillé, et sont ensuite durcies ou la matière plastique à expanser de la couche centrale (2) est appliquée sur la couche composite (5", 5'") déjà durcie et est par la suite durcie.

2. Panneau selon la revendication 1,
**caractérisé en ce que**
la matière plastique non expansée de la couche composite (5, 5', 5", 5‴) est conçue en un matériau polyuréthane.

3. Panneau selon la revendication 1 ou 2,
**caractérisé en ce que**
la couche centrale (2) est conçue en un matériau polyuréthane expansé.

4. Panneau selon l'une des revendications de 1 à 3,
**caractérisé en ce que**
le matériau fibreux de la couche composite (5, 5', 5", 5"') est un matériau en fibre de verre.

5. Panneau selon la revendication 4,
**caractérisé en ce que**
le matériau en fibre de verre est une fibre de verre hachée.

6. Panneau selon l'une des revendications de 1 à 5,
**caractérisé en ce que**
la proportion de matière plastique non expansée de la couche composite (5, 5', 5", 5") s'élève à au moins 50 % en poids, de préférence à au moins 60 % en poids, en particulier entre 60 % en poids et 80 % en poids, respectivement par rapport au panneau comportant les couches supérieures (3, 4, 4', 4", 4‴), la couche composite (5, 5', 5", 5‴) et la couche centrale (2).

7. Panneau selon l'une des revendications de 1 à 6,
**caractérisé en ce que**
la couche composite (5', 5", 5‴) prévoit, uniquement dans des zones soumises à des sollicitations mécaniques élevées, comme par exemple dans la zone (8), au moins un dispositif de sécurisation de charge, en particulier un rail de sécurisation de charge (6), et/ou dans la zone (8") au moins un rail à deux niveaux (6).

8. Panneau selon la revendication 7,
**caractérisé en ce que**
l'on prévoit la couche composite (5‴) dans la zone (8') d'une plinthe (14) et/ou d'une plinthe complémentaire.

9. Panneau selon la revendication 7 ou 8,
**caractérisé en ce que**
les bords (12, 13) de la couche composite (5', 5", 5"'), prévue uniquement par endroits, sont conçus essentiellement de façon ondulée et/ou arquée.

10. Panneau selon l'une des revendications de 1 à 9,
**caractérisé en ce que**
la couche composite (5, 5") est prévue sur toute la surface et/ou, uniquement par endroits, en plusieurs couches.

11. Panneau selon l'une des revendications de 1 à 10,
**caractérisé en ce que**
la tôle de la couche supérieure (4, 4", 4‴) associée à la couche composite (5, 5', 5", 5‴) a une épaisseur inférieure à 0,7 mm, de préférence inférieure à 0,55 mm.

12. Panneau selon l'une des revendications de 1 à 11,
**caractérisé en ce que**
l'on prévoit entre la couche centrale et les deux couches supérieures, au moins par endroits, respectivement une couche composite.

13. Panneau selon la revendication 12,
**caractérisé en ce que**
les couches composites sont, en ce qui concerne leur composition, conçues de manière identique.
